# EUROPÄISCHE PATENTSCHRIFT

(11) **EP 1 213 306 B1**
(45) Veröffentlichungstag und Bekanntmachung des Hinweises auf die Patenterteilung: **02.09.2009**
(21) Anmeldenummer: 01126370.4
(22) Anmeldetag: 07.11.2001
(51) Int. Cl.: C08F 220/12, C09J 133/06

(54) **Lösungen von UV-vernetzbaren Polyacrylaten**
Solutions of UV-curable polyacrylates
Solutions de polyacrylates durcissables par rayons UV

(30) Priorität: 08.12.2000 DE 10061022
(43) Veröffentlichungstag der Anmeldung: 12.06.2002
(73) Patentinhaber: BASF SE, 67056 Ludwigshafen (DE)
(72) Erfinder: Fink, Ralf, Dr., 67105 Schifferstadt (DE); Stöckelmann, Elmar, Dr., 67269 Grünstadt (DE); Ladenberger, Volker, Dr., 68723 Schwetzingen (DE); Schumacher, Karl-Heinz, Dr., 67433 Neustadt (DE)

(56) Entgegenhaltungen:
- EP-A- 0 377 199
- US-A- 4 362 895

## Beschreibung

UV-vernetzbare Polyacrylate und ihre Verwendung für Schmelzhaftklebstoffe sind z.B. in EP-A-377 199 beschrieben.

Die Polyacrylate werden in organischen Lösungen durch Lösungspolymerisation hergestellt. Das Lösungsmittel wird später entfernt, z.B. nach Methoden wie sie in EP-A-655 465 beschrieben sind. Die erhaltene Schmelze kann auf die gewünschten Substrate aufgetragen werden. Danach werden die Polyacrylate durch Bestrahlung mit UV-Licht vernetzt; der copolymerisierbare Fotoinitiator geht dabei eine Vernetzungsreaktion mit benachbarten Polymerketten ein.

Häufig vergeht zwischen der Herstellung der Polyacrylate und der Entfernung des Lösemittels einige Zeit. Insbesondere ist es wünschenswert die Polyacrylate bis zur späteren Verarbeitung in organischer Lösung zu belassen, da Lösungen leicht zu handhaben und gut transportierbar sind.

Nachteilig ist jedoch die ungenügende Lagerstabilität der Lösungen. Die ungenügende Lagerstabilität bewirkt insbesondere eine Verschlechterung der Klebstoffeigenschaften bei der späteren Verwendung.

Aufgabe der vorliegenden Erfindung waren daher Lösungen von UV-vernetzbaren Polyacrylaten in organischen Lösungen, die lagerstabil sind, d.h., dass bei langer Lagerung eine Verschlechterung der Produkteigenschaften nicht festzustellen ist.

Demgemäß wurden die eingangs definierten Lösungen und ihre Verwendung als Schmelzhaftklebstoff gefunden.

Die erfindungsgemäße Lösung enthält ein Polyacrylatcopolymer. Dabei handelt es sich um ein Polymer, welches durch radikalische Polymerisation von Acrylmonomeren, worunter auch Methylacrylmonomere verstanden werden, und weiteren, copolymerisierbaren Monomeren erhältlich ist.

Bevorzugt ist das Polyacrylat zu mindestens 40 Gew.-% besonders bevorzugt zu mindestens 60 Gew.-%, ganz besonders bevorzugt zu mindestens 80 Gew.-% aus C₁ - C₁₀ Alkyl(meth)acrylaten aufgebaut.

Genannt seien insbesondere C₁-C₈ Alkyl(meth)acrylate, z.B. Methyl(meth)acrylat, Ethyl(meth)acrylat, n-Butyl(meth)acrylat, 2-Ethylhexyl (methacrylat.

Es handelt es sich um ein mit UV-Licht vernetzbares Polyacrylatcopolymer. Der Fotoinitiator ist an das Polyacrylat gebunden.

Durch Bestrahlung mit energiereichem Licht, insbesondere UV-Licht bewirkt der Fotoinitiator eine Vernetzung des Polymeren, vorzugsweise durch eine chemische Propfreaktion des Fotoinitiators mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Das Polyacrylatcopolymer enthält vorzugsweise 0,0001 bis 1 mol, besonders bevorzugt 0,0002 bis 0,1, ganz besonders bevorzugt 0,0003 bis 0,01 mol des Fotoinitiators, bzw. der als Fotoinitiator wirksamen, an das Polymer gebundenen Molekülgruppe, pro 100 g Polyacrylatcopolymer.

Der Fotoinitiator wird vorzugsweise durch radikalische Copolymerisation in die Polymerkette eingebaut. Vorzugsweise enthält der Fotoinitiator dazu eine Acryl- oder (Meth)acrylgruppe.

Geeignete copolymerisierbare Fotoinitiatoren sind Acetophenon- oder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. ein Molekulargewicht von bis zu 500, insbesondere bis zu 300 oder 200 g/Mol aufweisen.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben und sind durch diesen Verweis auch in der vorliegenden Anmeldung offenbart. Bevorzugte Acetophenon- und Benzophenonderivate sind solche, bei denen die Anbindung der Spacergruppe an den Phenylring über eine Carbonatgruppe 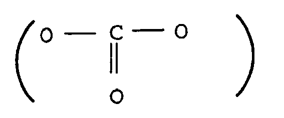 erfolgt. Bevorzugt sind Verbindungen der Formel: 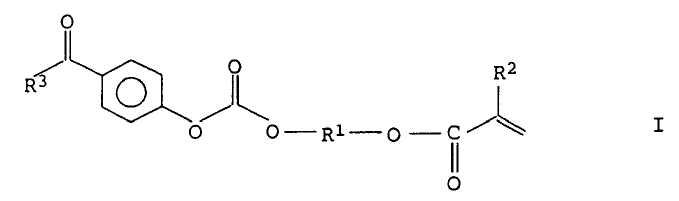 worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄-Alkylgruppe steht.

R¹ steht besonders bevorzugt für eine Alkylengruppe, insbesondere für eine C₂-C₈-Alkylengruppe.

R³ steht besonders bevorzugt für eine Methylgruppe oder eine Phenylgruppe, ganz besonders bevorzugt für eine Phenylgruppe.

Bevorzugt sind ebenfalls Acetophenon- und Benzophenonderivate der Formel 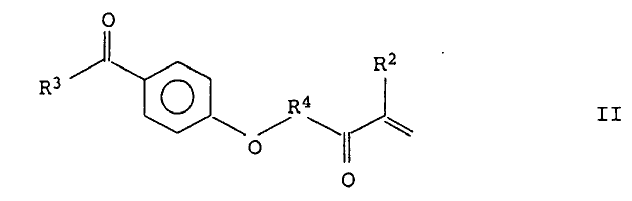 worin R³ und R² die obige Bedeutung hat und R⁴ stehen kann für:
- eine Einfachbindung
- für einen Rest R¹ mit der obigen Bedeutung und
- für (-CH₂-CH₂-O)ₙ 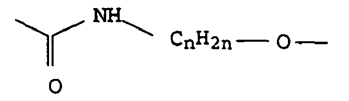 oder 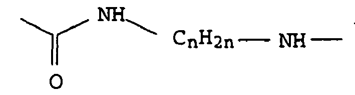
wobei n für eine ganze Zahl von 1 bis 12 steht.

Besonders bevorzugt sind Verbindungen der Formel I.

Weitere Monomere, aus denen das Polyacrylatcopolymer aufgebaut sein kann, sind z.B. Vinylester von bis zu 20 C-Atome enthaltenden Carbonsäuren, Vinylaromaten mit bis zu 20 C-Atome, ethylenisch ungesättigten Nitrile, Vinylhalogenide, Vinylether von 1 bis 10 C-Atome enthaltenden Alkoholen, aliphatischen Kohlenwasserstoffe mit 2 bis 8 C-Atomen und 1 oder 2 Doppelbindungen oder Mischungen dieser Monomeren.

Als vinylaromatische Verbindungen kommen z.B. Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als weitere Monomere in Betracht kommen insbesondere auch Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fummarsäure.

Weitere Monomere sind z. B. auch Hydroxylgruppen enthaltende Monomere, insbesondere C₁-C₁₀-Hydroxyalkyl(meth)acrylate, (Meth)acrylamid.

Darüberhinaus seinen Phenyloxyethylglykolmono-(meth)acrylat, Glydidylacrylat, Glycidylmethacrylat, Amino-(meth)acrylate wie 2-Aminoethyl(meth)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern.

Das Polyacrylatcopolymer hat vorzugsweise einen K-Wert von 30 bis 80, besonders bevorzugt von 40 bis 60, gemessen in Tetrahydrofuran (1%ige Lösung, 21°C).

Der K-Wert nach Fikentscher ist ein Maß für das Molekulargewicht und Viskosität des Polymerisats.

Die Glasübertragungstemperatur (Tg) des Polyacrylatcopolymeren beträgt vorzugsweise -60 bis +10°C, besonders bevorzugt -55 bis 0°C, ganz besonders bevorzugt -55 bis -10°C.

Die Glasübertragungstemperatur läßt sich nach üblichen Methoden wie Differentialthermoanalyse oder Differential Scanning Calorimetrie (s. z.B. ASTM 3418/82, sog. "midpoint temperature" bestimmen.

Die Polyacrylatcopolymere können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Polyacrylatcopolymere durch Polymerisation der Monomeren in Lösungsmitteln, insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt.

Als Polymerisationsinitiatoren kommen bei der Lösungspolymerisation beispielsweise Azoverbindungen, Ketonperoxide und Alkylperoxide in Betracht.

Die erfindungsgemäße Lösung enthält das Polyacrylatcopolymer und als Lösungsmittel Ketone oder Alkylacetate mit einem Siedepunkt unter 150°C bei 1 bar, insbesondere unter 130°C bei 1 bar.

Geeignete Ketone oder Alkylacetate haben im allgemeinen ein Molgewicht unter 150g/mol.

Genannt seien z.B. Aceton, Methylethylketon (MEK), Methylisobutylketon (MIBK), Essigsäuremethylester oder Essigsäureethylester.

Besonders bevorzugt sind Ketone, insbesondere MEK und MIBK.

Ganz besonders bevorzugt ist Methylisobutylketon.

Die Ketone oder Alkylacetate oder Gemische dieser Ketone oder Alkylacetate sind besonders bevorzugt als alleiniges Lösungsmittel. Sie können aber auch im Gemisch mit anderen Lösungsmitteln vorliegen. Im Falle eines derartigen Lösungsmittelgemischs beträgt der Anteil der Ketone oder Alkylacetate mindestens 50 Gew.-% bezogen auf die gesamte Lösungsmittelmenge, bevorzugt beträgt er mindestens 80 Gew.-%, besonders bevorzugt mindestens 95 Gew.-%.

Ganz besonders bevorzugt handelt es sich bei dem Lösungsmittel allein und ausschließlich um Methylisobutylketon.

Das Lösungsmittel kann bereits bei der Herstellung der Polyacrylatcopolymere, d.h. bei der Polymerisation der Monomeren als Lösungsmittel verwendet werden. Bei der Herstellung der Polyacrylatcopolymere kann jedoch auch ein anderes Lösungsmittel verwendet und dieses später gegen ein Lösungsmittel oder Lösungsmittelgemisch gemäß der vorliegenden Anmeldung ausgetauscht werden.

Die erfindungsgemäßen Lösungen sind lagerstabil. Aus dem erfindungsgemäßen Lösungen hergestellte Klebstoffbeschichtungen zeigen auch bei langen Lagerzeiten der Lösungen bzw. bei hohen Temperaturen während der Lagerung unverändert gute Klebstoffeigenschaften z.B. eine hohe Scherfestigkeit (als Maß für die Kohäsion).

Die erfindungsgemäße Lösung eignet sich als Schmelzhaftklebstoff und entsprechend zur Herstellung von Schmelzhaftklebstoffbeschichtungen, z.B. auf Etiketten, Klebebändern und Folien. Die Etiketten können z.B. aus Papier oder Kunststoffen wie Polyester, Polyolefine oder PVC sein. Die Klebebänder oder Folien können ebenfalls aus den vorstehenden Kunststoffen sein.

Zur Herstellung der Beschichtungen können die Schmelzhaftklebstoffe vorzugsweise als Schmelze auf die zu beschichtenden Substrate aufgetragen werden, d.h. das Lösungsmittel wird vorher nach geeigneten Verfahren entfernt, vorzugsweise auf einen Restgehalt von kleiner 0,5 %, bezogen auf das Polyacrylatcopolymer.

Danach kann die Zusammensetzung als Schmelze, d.h. im allgemeinen bei Temperaturen von 80 bis 160°C auf Substrate, wie sie z.B. oben genannt sind, aufgetragen werden.

Bevorzugte Schichtdicken sind z.B. 1 bis 200 µm, besonders bevorzugt 2 bis 80, ganz besonders bevorzugt 5 bis 80 µm.

Die mit UV-Licht vernetzbaren Polyacrylatcopolymere können dann mit energiereicher Strahlung, vorzugsweise UV-Licht bestrahlt werden, so daß eine Vernetzung erfolgt.

Im allgemeinen werden die beschichteten Substrate dazu auf ein Transportband gelegt und das Transportband an einer Strahlungsquelle, z.B. einer UV-Lampe vorbeigeführt.

Der Vernetzungsgrad der Polymerisate hängt von der Dauer und Intensität der Bestrahlung ab.

Vorzugsweise beträgt die Strahlungsenergie insgesamt 100 bis 1500 mJ/cm² bestrahlte Fläche.

Die erhaltenen, beschichteten Substrate können vorzugsweise als Selbstklebeartikel, wie Etiketten, Klebebänder oder Schutzfolien Verwendung finden.

Die erhaltenen, mit UV-Licht vernetzten Schmelzklebstoffbeschichtungen haben gute anwendungstechnische Eigenschaften, z.B. eine gute Haftung und hohe innere Festigkeit, auch bei langen Lagerzeiten der erfindungsgemäßen Lösung.

### Beispiele

Ein Polyacrylatcopolymer aufgebaut aus den Monomeren Butylacrylat, Ethylhexylacrylat und Acrylsäure und einem copolymerisierten Fotoinitiator wurde in Methylisobutylketon (MIBK) und zum Vergleich in iso-Butanol gelöst. Die Menge betrug 4 kg pro Liter Lösungsmittel.

Die Lösungen wurden bei den in der Tabelle angegebenen Temperaturen gelagert und in Abständen von 2 Stunden Proben entnommen.

Bei den entnommenen Proben wurde das Lösemittel umgehend entfernt und das Polyacrylatcopolymer auf eine Polyesterfolie mit einer Schichtdicke von 20 µm beschichtet und auf ein Stahlblech geklebt.

Anschließend wurde die Scherfestigkeit des Verbundes durch Belastung der 25x25 mm großen verklebten Fläche mit einem Gewicht von 1 kg und der Messung der Zeit bis zum Versagen des Verbundes ermittelt.

In der Tabelle angegeben ist die Zeit, nach der die Scherfestigkeit auf 90 % ihres vor der Lagerung bestimmten Wertes abgefallen ist.

| Lagerungstemperatur | Iso-Butanol | MiBK |
|---|---|---|
| 80°C | 35 h | > 72 h |
| 100°C | 15 h | > 72 h |
| 120°C | 10 h | > 72 h |
| 130°C | 6 h | > 72 h |

## Patentansprüche

1. Lösungen von Polyacrylatcopolymeren in einem Lösungsmittel oder Lösungsmittelgemisch, **dadurch gekennzeichnet, dass** die Polyacrylatcopolymere als Comonomer einen copolymerisierbaren Fotoinitiator für die nachträgliche Vernetzung mit UV-Licht enthalten und es sich bei dem Lösungsmittel um Ketone oder Alkylacetate mit einem Siedepunkt unter 150°C bei Normaldruck handelt oder das Lösungsmittelgemisch zu mindestens 50 Gew.-%, bezogen auf die gesamte Lösungsmittelmenge, aus diesen Ketonen oder Alkylacetaten besteht.

2. Lösungen gemäß Anspruch 1, **dadurch gekennzeichnet, dass** sie Polyacrylatcopolymere zu mindestens 60 Gew.-% aus C₁ bis C₁₀-Alkyl(meth)acrylaten bestehen.

3. Lösungen gemäß Anspruch 1 oder 2, **dadurch gekennzeichnet, dass** es sich bei dem copolymerisierbaren Fotoinitiator um ein Acetophenon- oder Benzophenonderivat mit einer copolymerisierbaren ethylenisch ungesättigten Gruppe handelt.

4. Lösungen gemäß einem der Ansprüche 1 bis 3, **dadurch gekennzeichnet, dass** es sich bei dem copolymerisierbaren Fotoinitiator um ein Acetophenon- oder Benzophenonderivat mit mindestens einer Acryl- oder Methacrylgruppe, welche direkt oder über eine organische Gruppe mit einem maximalen Molgewicht von 500 g/mol an einen Phenylring des Benzophenonderivats bzw. des Acetonphenonderivats gebunden ist, handelt.

5. Lösungen gemäß einem der Ansprüche 1 bis 4, **dadurch gekennzeichnet, dass** es sich bei dem copolymerisierbaren Fotoinitiator um eine Verbindung der Formel 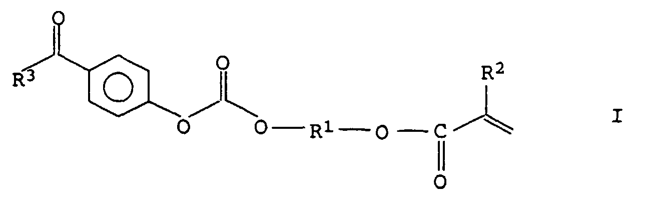 handelt.
worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄ Alkylgruppe steht.

6. Lösungen gemäß einem der Ansprüche 1 bis 5, **dadurch gekennzeichnet, dass** das Polyacrylatcopolymer 0,0001 bis 0,1 Mol des copolymerisierbaren Fotoinitiators auf 100 g Polyacrylatcopolymer enthält.

7. Lösungen gemäß einem der Ansprüche 1 bis 6, **dadurch gekennzeichnet, dass** es sich bei dem Lösungsmittel um Methylisobutylketon (MIBK) handelt oder das Lösungsmittelgemisch zu mehr als 95 Gew.-% aus MIBK besteht.

8. Verfahren zur Herstellung von lagerungsfähigen Polyacrylatcopolymeren, **dadurch gekennzeichnet, dass** die Herstellung der Polyacrylatcopolymere durch Polymerisation der Monomeren in einem Lösungsmittel oder Lösungsmittelgemisch gemäß einem der Ansprüche 1 bis 7 erfolgt oder nach der Herstellung das verwendete Lösungsmittel gegen ein Lösungsmittel oder Lösungsmittelgemisch gemäß einem der Ansprüche 1 bis 7 ausgetauscht wird.

9. Verwendung der Lösungen gemäß einem der Ansprüche 1 bis 8 für Schmelzhaftklebstoffe.

## Claims

1. A solution of polyacrylate copolymers in a solvent or a solvent mixture, wherein the polyacrylate copolymers comprise as comonomer a copolymerizable photoinitiator for the subsequent crosslinking with UV light, and the solvent comprises ketones or alkyl acetates having a boiling point below 150°C under atmospheric pressure, or the solvent mixture is composed to an extent of at least 50% by weight, based on the total amount of solvent, of these ketones or alkyl acetates.

2. The solution according to claim 1, wherein the polyacrylate copolymers are composed to an extent of at least 60% by weight of C₁ to C₁₀ alkyl (meth)acrylates.

3. The solution according to claim 1 or 2, wherein the copolymerizable photoinitiator is an acetophenone derivative or benzophenone derivative having a copolymerizable ethylenically unsaturated group.

4. The solution according to any of claims 1 to 3, wherein the copolymerizable photoinitiator is an acetophenone derivative or benzophenone derivative having at least one acrylic or methacrylic group which is attached directly or via an organic group having a maximum molar weight of 500 g/mol to a phenyl ring of the benzophenone derivative or of the acetophenone derivative.

5. The solution according to any of claims 1 to 4, wherein the copolymerizable photoinitiator is a compound of the formula 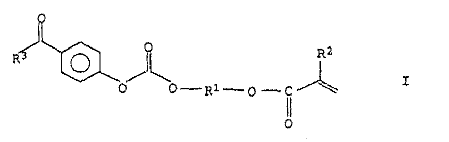 in which R¹ is an organic radical having up to 30 C atoms, R² is an H atom or a methyl group, and R³ is an optionally substituted phenyl group or a C₁-C₄ alkyl group.

6. The solution according to any of claims 1 to 5, wherein the polyacrylate copolymer contains 0.0001 to 0.1 mol of the copolymerizable photoinitiator to 100 g of polyacrylate copolymer.

7. The solution according to any of claims 1 to 6, wherein the solvent is methyl isobutyl ketone (MIBK) or the solvent mixture is composed to an extent of more than 95% by weight of MIBK.

8. A process for preparing storable polyacrylate copolymers, wherein the polyacrylate copolymers are prepared by polymerizing the monomers in a solvent or a solvent mixture according to any of claims 1 to 7 or, after the preparation, the solvent used is replaced by a solvent or a solvent mixture according to any of claims 1 to 7.

9. The use of a solution according to any of claims 1 to 8 for hot-melt pressure-sensitive adhesives.

## Revendications

1. Solutions de copolymères de polyacrylate dans un solvant ou un mélange de solvants, **caractérisées en ce que** les copolymères de polyacrylate contiennent, comme comonomère, un photo-initiateur copolymérisable pour la réticulation ultérieure par de la lumière UV et il s'agit, pour le solvant, de cétones ou d'acétates d'alkyle présentant un point d'ébullition inférieur à 150°C à pression normale ou le mélange de solvants est constitué, à raison d'au moins 50% en poids, par rapport à la quantité totale de solvants, par ces cétones ou acétates d'alkyle.

2. Solutions selon la revendication 1, **caractérisées en ce que** les copolymères de polyacrylate sont constitués à raison d'au moins 60% en poids par des (méth)acrylates d'alkyle en C₁-C₁₀.

3. Solutions selon la revendication 1 ou 2, **caractérisées en ce qu'**il s'agit, pour le photo-initiateur copolymérisable, d'un dérivé d'acétophénone ou de benzophénone présentant un groupe copolymérisable éthyléniquement insaturé.

4. Solutions selon l'une quelconque des revendications 1 à 3, **caractérisées en ce qu'**il s'agit, pour le photo-initiateur copolymérisable, d'un dérivé d'acétophénone ou de benzophénone présentant au moins un groupe acryle ou méthacryle, qui est lié directement ou via un groupe organique d'un poids moléculaire maximal de 500 g/mole sur un cycle phényle du dérivé de benzophénone ou, selon le cas, du dérivé d'acétophénone.

5. Solutions selon l'une quelconque des revendications 1 à 4, **caractérisées en ce qu'**il s'agit, pour le photo-initiateur copolymérisable, d'un composé de formule 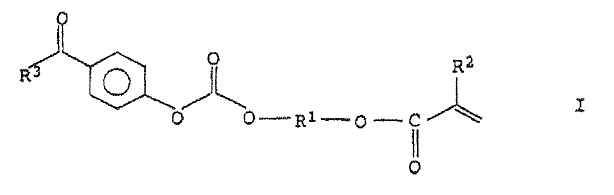 dans laquelle R¹ représente un radical organique comprenant jusqu'à 30 atomes de carbone, R² représente un atome H ou un groupe méthyle et R³ représente un groupe phényle le cas échéant substitué ou un groupe C₁-C₄-alkyle.

6. Solutions selon l'une quelconque des revendications 1 à 5, **caractérisées en ce que** le copolymère de polyacrylate contient 0,0001 à 0,1 mole du photo-initiateur copolymérisable pour 100 g de copolymère de polyacrylate.

7. Solutions selon l'une quelconque des revendications 1 à 6, **caractérisées en ce qu'**il s'agit, pour le solvant, de méthylisobutylcétone (MIBC) ou le mélange de solvants est constitué à raison de plus de 95% en poids de MIBC.

8. Procédé pour la préparation de copolymères de polyacrylate aptes à l'entreposage, **caractérisé en ce que** la préparation des copolymères de polyacrylate est réalisée par polymérisation des monomères dans un solvant ou un mélange de solvants selon l'une quelconque des revendications 1 à 7 ou le solvant utilisé est remplacé, après la préparation, par un solvant ou un mélange de solvants selon l'une quelconque des revendications 1 à 7.

9. Utilisation de solutions selon l'une quelconque des revendications 1 à 8 pour des auto-adhésifs en masse fondue.
